# FASCICULE DE BREVET EUROPEEN

(11) **EP 0 552 077 B1**
(45) Date de publication et mention de la délivrance du brevet: **08.09.1999**
(21) Numéro de dépôt: 93400039.9
(22) Date de dépôt: 08.01.1993
(51) Int. Cl.: G06F 12/14

(54) **Carte à mémoire de masse pour microordinateur avec facilités d'exécution de programmes internes**
Massenspeicherkarte für einen Mikrocomputer mit der Möglichkeit, interne Programme auszuführen
Mass memory card for microcomputer with facilities for execution of internal programs

(30) Priorité: 14.01.1992 FR 9200322
(43) Date de publication de la demande: 21.07.1993
(73) Titulaire: GEMPLUS CARD INTERNATIONAL, F-13420 Gémenos (FR)
(72) Inventeur: Leroux, Jean-Yves, F-75116 Paris (FR)
(74) Mandataire: Schmit, Christian Norbert Marie

(56) Documents cités:
- EP-A- 0 337 185
- EP-A- 0 368 596
- WO-A-87/05420
- FR-A- 2 483 657
- PATENT ABSTRACTS OF JAPAN vol. 14, no. 525 (P-1132) 19 Novembre 1990 & JP-A-02 219 149 ( NEC CORP. ) 31 Août 1990
- PATENT ABSTRACTS OF JAPAN vol. 15, no. 158 (P-1193) 19 Avril 1991 & JP-A-03 028 716 ( CHINO CORP. ) 6 Février 1991
- PATENT ABSTRACTS OF JAPAN vol. 15, no. 24 (P-1156) 21 Janvier 1991 & JP-A-02 267 794 ( NEC CORP. ) 1 Novembre 1990

## Description

Les cartes à mémoire de masse amovibles pour microordinateurs (ou ordinateurs personnels ou PC, de l'anglais "personal computer") ont fait leur apparition récemment comme accessoires des ordinateurs personnels, surtout pour les ordinateurs portables. Elles pourraient remplacer dans l'avenir les disquettes et autres moyens de stockage de masse de type magnétique. Elles peuvent servir de mémoire de masse d'aussi grande capacité que les disquettes magnétiques (ordre de grandeur : le million d'octets); leur encombrement n'est pas plus grand (format carte de crédit, épaisseur de 3 à 5 millimètres); elles sont beaucoup plus rapides d'accès (plusieurs milliers de fois plus rapides).

Elles peuvent même servir de mémoire vive de programme directement exécutable par l'ordinateur personnel. Dans ce cas, contrairement aux mémoires de masse magnétiques, elles n'ont pas à être chargées dans la mémoire vive (RAM) du PC pour être exécutées ensuite. Les programmes qu'elle contient sont exécutables directement par l'ordinateur personnel.

Les cartes à mémoire de masse, parfois appelées encore PC-Cards, comportent plusieurs puces de mémoire et un connecteur (connecteur femelle de 68 broches selon la norme PCMCIA de "Personal Computer Memory Card International Association" 1030B East Duane Avenue Sunnyvale, California). La carte est enfichable dans un connecteur correspondant (mâle) de l'ordinateur. Les connexions sont telles que la mémoire puisse être adressée par un port d'entrée-sortie parallèle du PC, soit comme si la mémoire était une mémoire de masse magnétique, soit comme si elle était une extension de mémoire vive de l'ordinateur.

Selon l'invention, on a pensé qu'il serait souhaitable de réaliser la carte à mémoire de masse de telle manière que certains des programmes qu'elle contient en mémoire soient exécutables par la carte elle-même et non pas par l'ordinateur.

Cela permettrait d'offrir des fonctionnalités supplémentaires, notamment pour la mise au point et la modification de programmes d'application relatifs à la carte. Cela permettrait aussi de libérer l'ordinateur personnel pour d'autres travaux pendant que la carte exécuterait une partie des travaux.

C'est pourquoi l'invention propose une carte à mémoire enfichable pour ordinateur personnel comme défini dans la revendication 1.

En d'autres mots, on prévoit un microprocesseur dans la carte, ce microprocesseur étant physiquement connecté aux mémoires de telle manière qu'il peut en recevoir directement (sur son bus d'instructions exécutables) des instructions exécutables. Le microprocesseur peut avoir sa propre mémoire morte de programmes, contenant notamment des programmes pour aller chercher dans les mémoires de la carte à mémoire des instructions à exécuter, et des programmes d'interprétation de ces instructions. Mais en outre, selon un mode particulier de réalisation de l'invention, le microprocesseur possédera un câblage direct entre son bus d'instructions et la mémoire de la carte (celle qui peut communiquer avec l'ordinateur extérieur) pour exécuter (et non pas interpréter) un programme qui y est contenu.

La carte comprendra de préférence un circuit d'aiguillage pour aiguiller vers la mémoire soit des signaux de contrôle issus du microprocesseur soit des signaux de contrôle issus de l'ordinateur dans lequel est montée la carte. Pendant l'exécution d'un programme en code directement exécutable, l'aiguillage ne transfère vers la mémoire que les signaux de contrôle issus du microprocesseur; ceux qui sont issus de l'ordinateur ne parviennent pas à la mémoire. Au contraire, dans d'autres opérations, et tout particulièrement celles qui consistent à charger des fichiers exécutables à partir de l'ordinateur, ce sont les signaux de contrôle provenant de l'ordinateur qui sont transmis.

Dans un exemple d'utilisation avantageuse de l'invention, le microprocesseur participe à l'exécution d'une fonction de sécurité (protection de la carte contre une utilisation abusive). Il est très intéressant alors d'avoir dans la mémoire des programmes d'application exécutables par le microprocesseur pour assurer cette sécurité. De cette manière, lorsqu'on change le contexte de l'application, on peut charger un nouveau programme exécutable. Ce ne serait pas possible si le microprocesseur ne pouvait exécuter que les instructions contenues dans sa mémoire morte de programmes.

Il est alors très souhaitable d'utiliser les fonctions de sécurité justement pour exercer un contrôle sur le droit de l'utilisateur à modifier les fichiers exécutables. Ceci est fait de préférence en prévoyant dans la carte une puce de sécurité (ou puce d'habilitation) apte à vérifier par un système de code confidentiel l'habilitation de l'utilisateur. De préférence aussi, la sécurité pourra comporter un fichier inaccessible, interne à la puce de sécurité, ce fichier contenant des "signatures" d'identification des fichiers exécutables à protéger; ces signatures sont des informations telles qu'en modifiant le fichier la signature est modifiée. La puce de sécurité aura pour fonction le stockage invisible et/ou la vérification de ces signatures.

La présente invention a donc plus particulièrement pour objet une carte à mémoire selon la revendication 1.

D'autres caractéristiques et avantages de l'invention apparaîtront à la lecture de la description détaillée qui suit et qui est faite en référence aux dessins annexés dans lesquels:
- la figure 1 représente l'architecture de la carte à mémoire de masse selon l'invention;
- la figure 2 représente un détail de circuit.

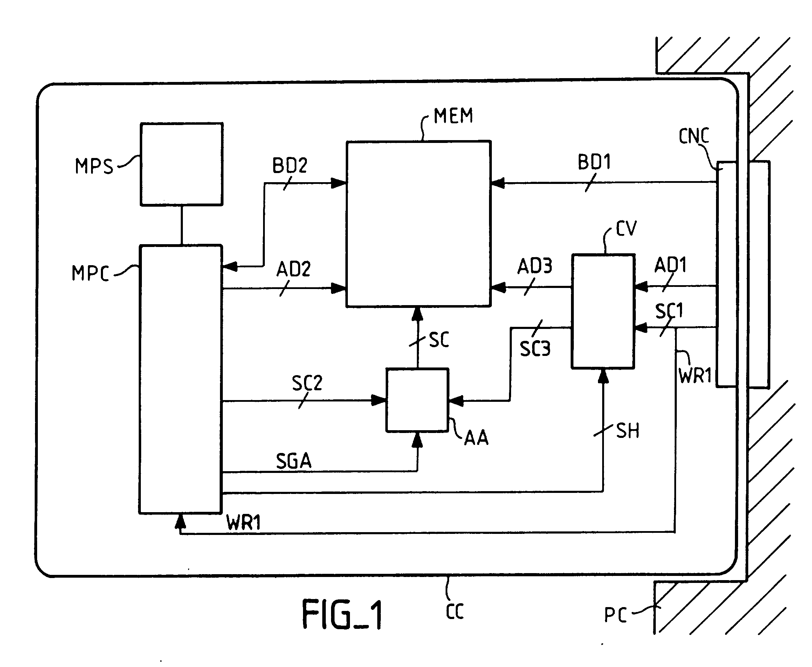

La carte CC représentée à la figure 1 est destinée à être insérée dans un ordinateur personnel (appelé ci-après PC pour "personal computer"); la carte comporte un connecteur enfichable standard CNC, de préférence du type défini par la norme PCMCIA et le PC comporte un connecteur correspondant pour recevoir la carte.

La carte est une carte à mémoire, c'est-à-dire qu'elle est destinée à servir principalement à stocker des données. Pour cette fonction, la carte comporte soit plusieurs types de mémoire différents (RAM statique ou dynamique, ROM, EPROM, EEPROM sont les types les plus courants), soit un seul type de mémoire. Si les mémoires sont des mémoires RAM, par essence volatiles, on peut prévoir une pile d'alimentation de secours pour la sauvegarde des données.

Pour obtenir une plus grande capacité de stockage, plusieurs puces de circuit intégré sont prévues, chacune étant une puce de mémoire. Ces puces sont globalement désignées sous la référence MEM. Il peut y avoir plusieurs dizaines de puces sur la carte pour des grandes capacités de stockage (plusieurs mégaoctets par exemple).

La carte CC est un organe périphérique amovible de l'ordinateur PC. Elle peut être utilisée soit comme périphérique de stockage de masse, soit comme extension de mémoire vive. C'est l'ordinateur qui gère ce choix (lorsqu'un choix est possible, c'est-à-dire surtout lorsqu'il y a plusieurs types de mémoire dans la carte).

Au moins certaines zones de la mémoire MEM sont accessibles en écriture par le PC. En pratique, la totalité ou la quasi-totalité de la mémoire MEM est accessible en lecture et en écriture, sous réserve toutefois que ce soit par un titulaire habilité dans le cas où des fonctions de sécurité d'accès sont prévues.

Outre les puces formant la mémoire MEM, la carte peut comporter d'autres puces. A titre d'exemple, on a indiqué sur la figure 1 un module de sécurité, qui est une puce de circuit-intégré MPS comportant un microprocesseur, de petites mémoires, et des programmes pour le fonctionnement du microprocesseur; ce module a pour fonction essentielle d'assurer la sécurité d'accès à la mémoire MEM à partir de l'ordinateur.

Selon l'invention, la carte CC comprend encore une puce supplémentaire qui est un microprocesseur MPC, qui a des fonctions qui peuvent être variées (liées par exemple au dialogue avec le module de sécurité) et qui a selon l'invention une fonction supplémentaire qui est l'exécution directe, à l'intérieur de la carte, de programmes contenus dans certaines zones de la mémoire MEM. Ces programmes sont stockés sous forme de codes opératoires directement exécutables dans le langage du microprocesseur, et le bus exécutable du microprocesseur (bus destiné à recevoir les instructions) est connecté à un bus de sortie de la mémoire MEM. Le microprocesseur peut être en outre pourvu d'une mémoire morte de programmes couplée à son bus exécutable. Toutefois, la particularité de l'invention est que cette mémoire morte (inaccessible à partir du PC) n'est pas la seule mémoire exécutable puisque des fichiers de la mémoire MEM (parmi les fichiers accessibles depuis le PC) sont aussi exécutables par le microprocesseur.

Les mémoires MEM sont connectées au PC par l'intermédiaire de plusieurs bus : un bus d'adresse, un bus de données, et un bus de signaux de contrôle. Toutefois, ces bus sont de préférence contrôlés par un circuit de verrouillage CV, lui-même contrôlé par le microprocesseur MPC, de manière que l'accès aux mémoires ne soit pas complètement libre, sauf si l'autorisation en est donnée par le microprocesseur MPC.

Dans l'exemple représenté, on a supposé que le circuit de verrouillage CV agit sur le bus d'adresse et sur le bus de signaux de contrôle mais pas sur le bus de données. D'autres solutions sont cependant possibles.

C'est pourquoi on a représenté d'une part un bus de données BD1 allant directement du connecteur CNC à la mémoire MEM; d'autre part un bus d'adresse allant du connecteur à la mémoire et interrompu par le circuit de verrouillage CV; ce bus est référencé AD1 en amont du circuit de verrouillage (du côté du connecteur) et AD3 en aval (du côté de la mémoire); enfin, un bus de signaux de contrôle (SC1 en amont, SC3 en aval) également interrompu par le circuit de verrouillage CV.

Un autre circuit (circuit d'aiguillage AA) est interposé entre le bus SC3 et la mémoire. Il a pour fonction d'aiguiller vers la mémoire soit les signaux de contrôle du bus SC3 en provenance du PC, soit des signaux de contrôle d'un bus SC2 en provenance du microprocesseur MPC. On reviendra sur ce point plus loin. Le bus de signaux de contrôle aboutissant finalement à la mémoire est désigné par SC, en aval du circuit d'aiguillage AA.

A titre d'exemple illustratif simplifié, on peut considérer par exemple que les bus de contrôle SC1, ou SC2 ou SC3 ou SC transportent des signaux tels que des ordres de lecture (RD1, RD2, RD3, RD) ou d'écriture (WR1, WR2, WR3, WR) ou des ordres de sélection d'une puce parmi plusieurs : CEa1, CEa2, CEa3, CEa pour la sélection d'une puce de mémoire A parmi plusieurs puces A, B, C de la mémoire MEM; ou CEb1, CEb2, CEb3, CEb pour la puce B, etc.

Le circuit de verrouillage CV est directement contrôlé par un bus d'habilitation SH issu du microprocesseur MPC. Ce bus transporte des signaux d'autorisation ou d'interdiction de passage des signaux de contrôle ou d'adresse qui transitent à travers le circuit de verrouillage CV. A titre d'exemple toujours, on peut imaginer qu'il y a un signal d'habilitation de lecture SHR, un signal d'habilitation d'écriture SHW, des signaux d'habilitation pour chaque puce de mémoire, SHA pour la puce A, SHB pour la puce B, SHC pour la puce C.

La particularité est que les signaux d'habilitation sont directement issus du microprocesseur MPC. Ils servent essentiellement à assurer la sécurité d'accès à la mémoire MEM à partir du PC dans les applications où une sécurité d'accès est exigée (et contrôlée par le microprocesseur MPC et le module de sécurité MPS).

Le microprocesseur MPC a donc la possibilité d'interdire électroniquement et sélectivement l'accès en lecture ou en écriture à certaines parties de la mémoire MEM de la carte.

Pour terminer la description générale de l'architecture de la figure 1, on signalera encore les points suivants :
- le microprocesseur MPC peut accéder à volonté à la mémoire MEM; le plus simple est de prévoir que cette mémoire est à double accès et c'est pourquoi on a représenté un bus d'adresse AD2 et un bus de données BD2 entre le microprocesseur et la mémoire; mais cette solution n'est pas obligatoire, une mémoire à simple accès étant également possible; une partie du bus de données BD2 constitue le bus exécutable du microprocesseur MPC, de sorte que ce dernier peut exécuter directement des programmes en langage exécutable stocké dans des fichiers de la mémoire MEM;
- l'accès par le microprocesseur MPC à la mémoire se fait à l'aide d'un bus de signaux de contrôle SC2 issu du microprocesseur, mais, comme on l'a dit, ce bus transite à travers le circuit d'aiguillage AA; cette disposition vise à permettre un fonctionnement du microprocesseur en circuit fermé avec la mémoire MEM pendant certaines phases de programmes;
- un signal d'aiguillage général SGA, issu du microprocesseur MPC commande l'aiguillage AA.
- enfin, dans le cas où des demandes formulées par le PC extérieur transitent systématiquement par la mémoire MEM avant d'aboutir au microprocesseur pour être interprétées puis exécutées, il est utile de prévoir que les ordres d'écriture WR1 issus du PC sont détectés par le microprocesseur MPC; de cette manière, ce dernier peut savoir qu'une demande a été faite et peut aller chercher éventuellement dans la mémoire MEM une instruction à interpréter; c'est pourquoi une connection directe WR1 a été représentée entre le connecteur CNC et le microprocesseur.

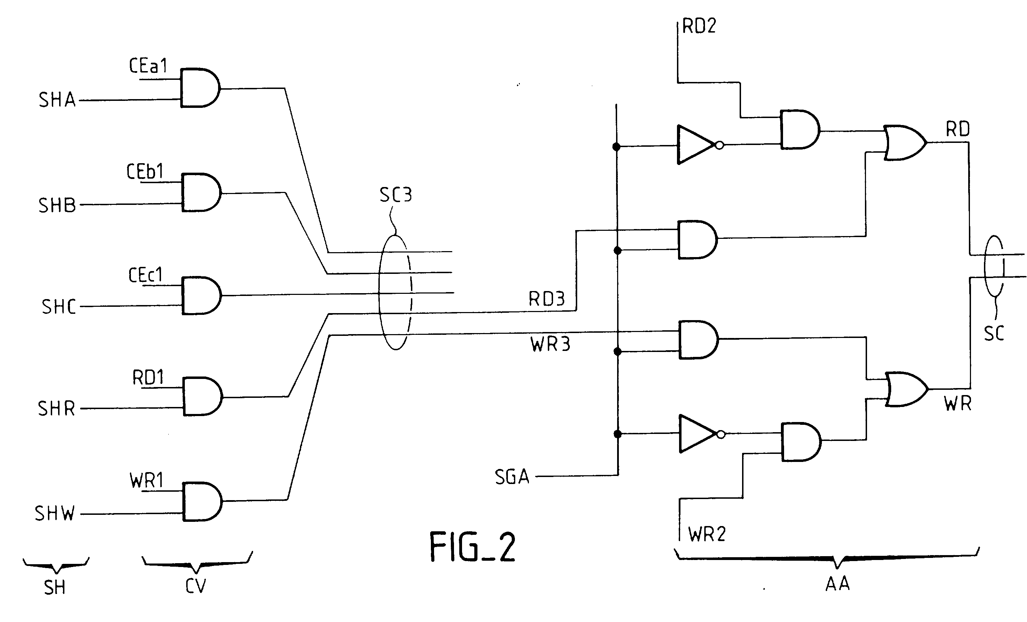

Les circuits de verrouillage et d'aiguillage CV et AA sont des circuits de logique câblée extrêmement simples. Un exemple en est donné à la figure 2 pour faciliter la compréhension du principe de l'invention.

On suppose par exemple que l'accès aux diverses puces de mémoire en lecture et en écriture exige la présence de signaux de sélection de puces ("chip enable") CEa, CEb, CEc pour les puces A, B, C respectivement, et la présence d'ordres de lecture RD ou d'écriture WR. Les signaux CEa, CEb, CEc forment donc dans cet exemple le contenu du bus de contrôle SC aboutissant à la mémoire MEM.

Des demandes d'accès sont formulées par le PC extérieur sous formes de signaux CEa1, CEb1, CEc1, RD1, WR1 sur le bus SC1, accompagnés d'une adresse sur le bus AD1. Des signaux SHA, SHB, SHC, SHR, SHW sont présents sur le bus d'habilitation SH. Chacun de ces signaux commande l'ouverture ou la fermeture d'une porte ET respective; chacune des portes reçoit un signal de contrôle respectif. Les entrées de ces portes constituent le bus SC1 de la figure 1; les sorties constituent le bus SC3 transportant ou non les signaux de contrôle tels que reçus du PC selon les autorisations données par le microcontrôleur.

Les signaux de contrôle transportés sur le bus SC3 sont appliqués au circuit d'aiguillage AA qui a été représenté partiellement sur la figure 2.

Le circuit d'aiguillage est contrôlé par un signal d'aiguillage SGA. Selon l'état de ce signal, on transfère vers le bus SC (c'est-à-dire vers la mémoire MEM) soit les signaux de contrôle issus du bus SC3 (par exemple RD3, WR3, etc.), c'est-à dire les signaux de contrôle issus du PC sous contrôle du microprocesseur, soit les signaux de contrôle (RD2, WR2, etc.) issus du microcontrôleur lui-même.

Par exemple, pour l'aiguillage des signaux de contrôle de lecture RD, une porte ET reçoit RD3 et est commandée par le signal SGA; une autre reçoit RD2 et est commandée par le complément logique de SGA, et une porte OU reçoit les sorties de ces deux portes et fournit le signal de lecture RD; ce signal est soit RD2 soit RD3 selon l'état de SGA.

L'action du circuit de verrouillage CV a été représentée sur les signaux de contrôle uniquement, mais on comprendra, conformément à l'architecture dessinée sur la figure 1, qu'elle peut s'exercer aussi sur les bits d'adresse envoyés par le PC.

La fonction du circuit AA est, selon l'invention, de permettre que les mémoires soient contrôlées en lecture et en écriture soit par le microprocesseur MPC, pour une exécution directe de programmes par celui-ci, soit par le microordinateur personnel, pour diverses opérations.

Selon l'état du signal SGA, ce sont soit les ordres en provenance du PC (RD1, WR1, etc.) soit les ordres en provenance du microprocesseur MPC (RD2, WR2, etc.) qui sont pris en compte et aiguillés vers les mémoires MEM.

De cette manière, la carte à mémoire selon l'invention peut servir à des usages plus sophistiqués que ce qui était possible auparavant.

Dans un premier usage (classique), la carte sert à stocker des programmes et des données qui seront utilisés par l'ordinateur (transfert pur et simple de ces programmes et données dans la mémoire vive de l'ordinateur). Le transfert inverse est également possible : chargement dans la carte à mémoire de nouvelles données, de nouveaux programmes.

Dans un deuxième usage déjà connu, la carte à mémoire sert d'extension de mémoire vive pour l'ordinateur personnel : des programmes directement exécutables par l'ordinateur sont stockés dans la mémoire MEM; les instructions sont stockées sous forme directement compréhensibles par l'unité centrale de l'ordinateur. Elles sont exécutées par lui sans être au préalable chargées dans la mémoire vive de l'ordinateur.

Dans un troisième usage, spécifique de l'invention, le microprocesseur MPC bloque l'accès des signaux de contrôle (RD1, WR1, etc.) par le circuit AA; le microprocesseur travaille directement avec les mémoires MEM qui contiennent dans certaines zones des codes opératoires directement exécutables par le microprocesseur. Pendant ce temps, l'ordinateur personnel peut très bien continuer à exécuter d'autres tâches.

Ces programmes d'instructions directement exécutables ont pu être chargés au préalable par l'ordinateur à un moment où l'accès lui a été redonné par le signal SGA. Ces programmes sont en effet situés dans des zones accessibles en écriture par le PC (sous réserve des habilitations de sécurité).

On peut ainsi modifier aisément les tâches accomplies par le microprocesseur MPC, en changeant les programmes qu'il peut exécuter. Par exemple, en supposant que le microprocesseur a pour fonction de constituer un processeur maître pour le module de sécurité MPS qui serait un esclave, selon un programme qui peut dépendre de l'application envisagée, on voit qu'il devient facile de changer l'application. Ce ne serait pas possible si le microprocesseur MPC fonctionnait uniquement sous le contrôle d'un programme figé en mémoire morte.

Dans ce qui précède, la carte à mémoire a été présentée comme un périphérique relié à l'ordinateur mais pas reliée à autre chose. Mais elle peut être aussi un périphérique de communication avec l'extérieur (carte MODEM, etc., carte de contrôle constituant une interface intelligente avec une machine); dans ce cas, elle comporte un connecteur supplémentaire vers l'extérieur (prise pour ligne téléphonique par exemple). Les processus de communication sont contrôlés par le microprocesseur MPC. L'invention est tout particulièrement intéressante dans un tel cas car elle permet de modifier les programmes permettant la communication, soit pour mettre au point une application, soit pour changer d'application.

Le déroulement d'un travail exécuté par le microprocesseur peut se faire selon les lignes générales suivantes :
- un fichier F1 de la mémoire MEM contient un programme est écrit dans un langage directement exécutable par le microprocesseur; ce fichier a pu être écrit par le PC dans une étape préalable;
- un fichier F2 de la mémoire peut recevoir du PC des instructions (interprétables, mais non exécutables), à destination du le microprocesseur; les programmes de mémoire morte du microprocesseur permettent d'aller chercher le contenu du fichier F2 sur requête du PC; ils permettent aussi d'interpréter les instructions contenues dans ce fichier F2;
- le PC écrit dans le fichier F2 un ordre qui est l'ordre d'exécution interne du programme exécutable contenu dans le fichier F1;
- cette écriture par le PC est "vue" par le microprocesseur MPC (connexion WR1) et comprise comme une requête pour aller lire le fichier F2;
- le microprocesseur invalide alors, par le signal SGA, l'accès à partir du PC; puis il va lire le fichier F2 et interpréter une à une les instructions qui y sont contenues, incluant l'ordre d'exécuter le fichier F1;
- le microprocesseur exécute alors un saut à la première adresse du fichier F1 et exécute successivement les instructions directement exécutables de ce fichier; pendant ce temps, l'accès à la mémoire par le PC est invalidé par le signal SGA;
- la fin du fichier F1 comporte une instruction pour rendre la main aux programmes internes de mémoire morte du microprocesseur, lesquels comportent des instructions de renvoi d'un mot d'état vers le fichier F2; ce mot représente le fait que l'exécution de F1 est terminée;
- le microprocesseur revalide l'accès par le PC en inversant l'état du signal SGA.

On va maintenant montrer que ces possibilités nouvelles sont intéressantes en relation avec les programmes de gestion de sécurité d'utilisation de la carte à mémoire : sécurité contre une lecture ou une écriture de zones de données ou de programmes par un utilisateur non habilité.

L'accès à certaines zones de mémoire (certaines puces par exemple ou certaines zones de puces) à partir du PC est autorisé par le microcontrôleur MPC en fonction de critères de sécurité prédéfinis et en fonction de confirmations données par le module de sécurité.

Le module de sécurité est de préférence la puce de circuit intégré du composant vendu par SGS-THOMSON sous la référence ST16612, à laquelle est incorporé le programme de mémoire non volatile MCOS de la société GEMPLUS. Ce composant possède les particularités suivantes : les données de mémoire sont invisibles pour l'utilisateur car elles ne transitent pas sur les entrées-sorties de la puce. Elles sont également invisibles optiquement (masquées). La puce comporte un microprocesseur et lui seul peut aller chercher et traiter des données en mémoire. Les programmes de mémoire morte sont réalisés par masquage. Ils ne sont donc pas modifiables. Ces programmes n'autorisent pas l'accès à toutes les zones de mémoire de la puce. Lorsqu'un code secret d'habilitation est présenté sur les entrées de la puce, il est traité par le microprocesseur qui fournit en réponse des signaux d'habilitation ou d'interdiction, et à aucun moment la nature du traitement de vérification ne peut être détectée sur les bornes d'entrée/sortie de la puce.

La procédure se déroule par exemple de la manière suivante : l'insertion de la carte à mémoire de masse dans l'ordinateur déclenche les opérations suivantes : demande par le PC du code confidentiel d'habilitation du titulaire; ce code est introduit par l'utilisateur sur le clavier du PC selon un protocole de communication parallèle standard pour un PC. Il est transmis au microprocesseur de contrôle MPC de la carte et retransmis par celui-ci vers le module de sécurité MPS dans un format compréhensible par celui-ci (en principe par conséquent sous forme série sur la seule borne d'entrée/sortie disponible sur la puce MPS). Le module de sécurité vérifie le code confidentiel et transmet au microprocesseur MPC un mot de contrôle traduisant l'état des autorisations données (interdiction totale, autorisation totale, autorisation partielle de certaines zones de mémoire par exemple). Le microprocesseur de contrôle MPC reçoit ce mot sous forme sérielle et établit alors sur le bus SH les signaux d'habilitation correspondants (SHA, SHB, SHC, SHR, SHW ...) qui commandent l'accès aux diverses puces de mémoire. Puis le microprocesseur MPC renvoie vers le PC un mot d'état indiquant que la procédure de sécurité a été effectuée et indiquant le résultat de cette procédure.

Dans ce système on comprend que c'est le microprocesseur MPC qui gère les programmes de sécurité de la carte à mémoire. Il définit les autorisations et les interdictions, et utilise le module de sécurité comme organe spécialisé de vérification d'une habilitation par code confidentiel. Aucune opération de sécurité d'accès n'est gérée par le PC.

Dans une structure de sécurité renforcée, les données stockées dans la mémoire sont cryptées au moyen d'une clé secrète. La clé secrète de décryptage n'est pas connue de l'utilisateur. Elle est contenue dans le module de sécurité. Sur présentation d'un code d'habilitation valable, le module de sécurité fournit la clé secrète au microprocesseur MPC qui peut alors exécuter un programme de décryptage des données de mémoire et les transmettre au PC sous forme déchiffrée. On s'assure ainsi que les données stockées dans la mémoire ne sont pas copiables utilement par une personne non habilitée. L'inscription de données dans la mémoire peut aussi se faire de manière cryptée avec la même clé de cryptage, et là encore seulement après reconnaissance de l'habilitation de l'utilisateur.

On notera qu'on ne fait pas sortir des données sous forme cryptée comme c'est le cas dans certaines applications de sécurité, mais on crypte les données stockées à l'intérieur de la carte à mémoire pour qu'une copie de ces données soit inutilisable par quelqu'un qui n'est pas habilité.

Cela veut dire en particulier que même si on forçait frauduleusement le signal SGA ou les signaux RD, WR, pour lire les données de la carte, ces données resteraient inexploitables.

Dans cette utilisation des circuits MPC et MPS pour gérer la sécurité de la carte, on comprend que l'invention permet de modifier les programmes qui gèrent cette sécurité : on utilise des fichiers tels que F1 de la mémoire MEM pour y mettre des programmes directement exécutables plutôt que d'utiliser une mémoire morte figée du microprocesseur MPC. On peut ainsi modifier les programmes de gestion de sécurité en fonction de l'application tout en gardant le même microprocesseur MPC et le même module de sécurité MPS.

Toutefois, comme la gestion de la sécurité suppose que l'utilisateur non autorisé ne puisse pas modifier facilement les programmes de gestion de sécurité, on pourra prévoir des mesures de sécurité renforcées pour la protection des fichiers exécutables tels que F1.

Une méthode pour obtenir cette sécurité renforcée est la suivante : à chaque fichier exécutable à protéger est associé une certaine "signature" qui représente ce fichier et qui est altérée si le fichier est modifié. Cette signature est constituée à partir du contenu du fichier lui-même : par exemple c'est la concaténation de tous les bits du fichier. Cette signature est stockée dans une mémoire non volatile et non accessible (invisible pour l'utilisateur) du module de sécurité. Lorsque le fichier doit être utilisé (et tout particulièrement dans le cas où il va servir de programme exécutable par le microprocesseur MPC), on va d'abord vérifier qu'il n'y a pas eu altération du fichier. S'il y a eu altération, on empêchera toute utilisation. Pour cela, le microprocesseur va d'abord recalculer la signature du fichier (auquel il a accès); il va demander au module de sécurité quelle est la signature attendue; puis faire la comparaison et ne valider l'utilisation que si les signatures se correspondent. La comparaison pourrait aussi se faire à l'intérieur du module de sécurité. Il peut y avoir dans le module de sécurité autant de signatures stockées que de fichiers à protéger. Il y a donc dans le module de sécurité une "image" des fichiers à protéger de la mémoire MEM, sous forme d'un fichier de signatures correspondant aux diverses parties à protéger. Toute altération invalide l'utilisation de la carte. Les programmes de gestion de cette sécurité renforcée (programmes de calcul de signature, de comparaison de signatures, etc.) sont au moins partiellement dans les programmes figés (non accessibles par le PC) du microprocesseur MPC ou du module de sécurité MPS.

## Revendications

1. Carte à mémoire (CC) enfichable pour ordinateur, comprenant au moins une mémoire (MEM) accessible en écriture par l'ordinateur par l'intermédiaire d'un bus de données et d'un bus d'adresse connectés à l'ordinateur, caractérisée en ce qu'elle comporte en outre un microprocesseur (MPC) et des moyens (BD2,AA) pour faire exécuter directement par le microprocesseur un programme d'instructions contenu dans la mémoire accessible; comprenant un circuit d'aiguillage (AA) commandé par le microprocesseur, pour fournir des signaux de contrôle (SC) à destination de la mémoire (MEM), ce circuit d'aiguillage recevant des signaux de contrôle à aiguiller vers la mémoire, d'une part, de l'ordinateur dans lequel est insérée la carte et d'autre part, du microprocesseur.

2. Carte à mémoire selon la revendication 1, caractérisée en ce que les moyens pour faire exécuter directement un programme comprennent un bus exécutable (BD2) du microprocesseur, ce bus étant connecté directement à un bus de sortie de la mémoire (MEM).

3. Carte à mémoire selon l'une des revendications 1 et 2, caractérisée en ce qu'elle comporte des programmes de gestion de sécurité d'accès à la carte, dans un fichier exécutable accessible de la mémoire (MEM).

4. Carte à mémoire selon la revendication 4, caractérisée en ce que des programmes de calcul et comparaison de signatures des fichiers exécutables sont contenus dans des mémoires de programme non accessibles.

## Patentansprüche

1. Speicherkarte, welche in einen Computer einsteckbar ist, umfassend mindestens einen Speicher (MEM), auf den der Computer einen Schreibzugriff über einen Datenbus und einen Adressbus hat, welche mit dem Computer verbunden sind, **dadurch gekennzeichnet, dass** sie auch einen Mikroprozessor (MPC) umfasst, und Mittel (BD2, AA), um durch den Mikroprozessor direkt ein Befehlsprogramm ausführen zu lassen, das in dem zugänglichen Speicher enthalten ist; umfassend eine von dem Mikroprozessor befehligte Verzweigungsschaltung (AA), um dem Speicher (MEM) Steuersignale (SC) bereitzustellen, wobei diese Verzweigungsschaltung Steuersignale empfängt, welche zum Speicher zu leiten sind, einerseits vom Computer, in welchen die Karte eingeführt ist, und andererseits vom Mikroprozessor.

2. Speicherkarte nach Anspruch 1, **dadurch gekennzeichnet**, **dass** die Mittel zur direkten Ausführung eines Programmes einen vom Mikroprozessor ausführbaren Bus (BD2) umfassen, wobei dieser Bus direkt mit einem Ausgangsbus des Speichers (MEM) verbunden ist.

3. Speicherkarte nach Anspruch 1 oder 2, **dadurch gekennzeichnet**, **dass** sie Verwaltungsprogramme der Sicherheit des Zugriffs auf die Karte umfasst, in einer zugänglichen, ausführbaren Datei des Speichers (MEM).

4. Speicherkarte nach Anspruch 4, **dadurch gekennzeichnet**, **dass** Programme der Berechnung und des Unterschriftsvergleichs der ausführbaren Dateien in nicht-zugänglichen Programmspeichern enthalten sind.

## Claims

1. A pluggable memory board (CC) for computer, comprising at least a computer-writable memory (MEM) via a data bus and an address bus connected to the computer, characterised in that it includes further a microprocessor (MPC) and means (BD2,AA) causing the computer to execute directly an instruction program contained in the accessible memory; comprising a switching circuit (AA) controlled by the microprocessor for supplying control signals (SC) to the memory (MEM), this switching circuit receiving control signals to be switched towards the computer's memory into which the board is inserted, on the one hand, and towards the microprocessor's memory on the other hand.

2. A memory board according to claim 1, characterised in that the means for causing a program to be executed directly includes a bus executable from the microprocessor (BD2), this bus being directly connected to a memory (MEM) output bus.

3. A memory board according to one of claims 1 and 2, characterised in that it includes management programs of security access to the board, in an executable file accessible from the memory (MEM).

4. A memory board according to claim 4, characterised in that the programs for calculation and comparison of signatures for executable files are contained in non-accessible program memories.
